# EUROPEAN PATENT APPLICATION

(11) **EP 2 524 833 A1**
(43) Date of publication of application: **21.11.2012**
(21) Application number: 10843109.9
(22) Date of filing: 15.11.2010
(51) Int. Cl.: B60L 3/00, B60L 11/18

(54) **ELECTRIC VEHICLE**

(30) Priority: 15.01.2010 JP 2010007078
(71) Applicant: Honda Motor Co., Ltd., Minato-ku Tokyo 107-8556 (JP)
(72) Inventor: WADA Shinji, Wako-shi Saitama 351-0193 (JP)
(74) Representative: Trossin, Hans-Jürgen
(86) International application number: PCT/JP2010/070270
(87) International publication number: WO 2011/086754

(57) **Abstract**

An electric vehicle (12) is provided with an electric energy consumption calculating unit (34) for calculating the electric energy consumption of a battery (22) for supplying electric energy to a motor (20) for traveling, a virtual gasoline consumption estimating unit (34) for estimating the virtual gasoline consumption corresponding to the electric energy consumption, an electric energy fee calculating unit (34) for calculating the electric energy fee corresponding to the electric energy consumption, a virtual gasoline fee calculating unit (34) for calculating the virtual gasoline fee corresponding to the virtual gasoline consumption, and a fee comparison information output means (36) for outputting information about the comparison between the electric energy fee and the virtual gasoline fee in the form of an image or a speech.

## Description

### Technical Field

The present invention relates to an electric vehicle that outputs in the form of an image or as speech information representing a comparison between an electric power charge for an actual amount of consumed electric power, and a hypothetical gasoline charge for a hypothetical amount of consumed gasoline, which is estimated based on the amount of consumed electric power.

### Background Art

Numerous efforts have been made to develop electric vehicles as one class of environmentally friendly vehicles. Certain electric vehicles are capable of outputting information concerning the amount of reduced emission gases compared with gasoline-powered vehicles. See, Japanese Laid-Open Patent Publication No. 2001-078304 (hereinafter referred to as "JP2001-078304A"). According to JP2001-078304A, an amount of reduced carbon dioxide is calculated based on the distance that an electric vehicle has traveled, and information depending on an accumulated value of the amount of reduced carbon dioxide is displayed (see, for example, Abstract and FIGS. 2 through 4 of JP2001-078304A).

### Summary of Invention

According to JP2001-078304A, although the user can recognize an accumulated value of the amount of reduced carbon dioxide, the user is unable to recognize the amount of reduction in cost.

The present invention has been made in view of the aforementioned problems. It is an object of the present invention to provide an electric vehicle, which allows the user to recognize an amount of reduction in cost compared with gasoline-powered vehicles.

According to the present invention, there is provided an electric vehicle, which is propelled by supplying electric power from a battery to a traction motor, comprising an amount-of-consumed-electric-power calculator for calculating an amount of consumed electric power of the battery, a hypothetical-amount-of-consumed-gasoline estimator for estimating a hypothetical amount of consumed gasoline corresponding to the amount of consumed electric power, an electric-power-charge calculator for calculating an electric power charge corresponding to the amount of consumed electric power, a hypothetical-gasoline-charge calculator for calculating a hypothetical gasoline charge corresponding to the hypothetical amount of consumed gasoline, and a charge-comparing-information outputting unit for outputting an image or speech that provides information of a comparison between the electric power charge and the hypothetical gasoline charge.

According to the present invention, information of a comparison between the electric power charge corresponding to the amount of consumed electric power of the battery and the hypothetical gasoline charge corresponding to the amount of consumed electric power can be output as an image or as speech. Therefore, the user of the electric vehicle can recognize the amount of reduction in cost in comparison with gasoline-powered vehicles.

The electric vehicle may further comprise a charge difference calculator for calculating the charge difference between the electric power charge and the hypothetical gasoline charge, wherein the charge-comparing-information outputting unit outputs an image or speech that indicates the charge difference. Since the calculated charge difference between the electric power charge and the hypothetical gasoline charge is output as an image or as speech, the user can easily grasp the reduced cost achieved by using the electric vehicle.

The amount of consumed electric power and the hypothetical amount of consumed gasoline may comprise an amount of consumed electric power and a hypothetical amount of consumed gasoline, respectively, per unit time or per unit traveled distance, and the charge-comparing-information outputting unit may output an image or speech that indicates the electric power charge and the hypothetical gasoline charge based on the amount of consumed electric power and the hypothetical amount of consumed gasoline per unit time or per unit traveled distance. The comparison results can thus be output with precision.

The electric vehicle may further comprise a storage unit for storing, in association with each other, a range of states of charge of the battery charged from a charging station, and an electric power unit cost at the charging station while the battery is being charged from the charging station, wherein the electric-power-charge calculator calculates the electric power charge using the amount of consumed electric power and the electric power unit cost at the charging station. In this manner, the cost for the amount of consumed electric power can be reflected more precisely, thereby allowing the user to easily grasp the cost difference, if any, between electric power unit costs at different charging stations and in different charging time zones.

The storage unit may store results of charging processes at a plurality of charging stations. Comparison results for a longer period of time can thus be output with precision.

The electric vehicle may further comprise a position detector for detecting the position of the electric vehicle, wherein the hypothetical-gasoline-charge calculator calculates the hypothetical gasoline charge using a gasoline unit cost corresponding to a geographic region where the electric vehicle is presently located. The comparison results can thus be output with precision.

### Brief Description of Drawings

FIG. 1 is a block diagram of an electric vehicle system including electric vehicles according to an embodiment of the present invention;
FIG. 2 is a flowchart of a process sequence during charging of the electric vehicle;
FIG. 3 is a diagram showing an example of a relationship between the state of charge of a battery used by the electric vehicle, and the unit price of electric power;
FIG. 4 is a flowchart of a charge difference display process during traveling of the electric vehicle;
FIG. 5 is a flowchart of a process for determining a present amount of consumed electric power according to the embodiment;
FIG. 6 is a flowchart of a process for determining an electric power charge corresponding to a present amount of consumed electric power according to the embodiment;
FIG. 7 is a flowchart of a process for determining a present hypothetical amount of consumed gasoline according to the embodiment;
FIG. 8 is a diagram showing a relationship between traction energy and a corresponding hypothetical amount of consumed gasoline according to the embodiment;
FIG. 9 is a diagram showing a relationship between a parked idling time and a corresponding hypothetical amount of consumed gasoline according to the embodiment;
FIG. 10 is a diagram showing a relationship between an air conditioner load and a corresponding hypothetical amount of consumed gasoline according to the embodiment;
FIG. 11 is a flowchart of a process for acquiring gasoline unit price information, and for calculating a hypothetical gasoline charge according to the embodiment; and
FIG. 12 is a view showing in concise form an example of a display screen according to the embodiment.

### Description of Embodiments

### A. Embodiment

### 1. Explanation of Arrangement

### (1) Overall Electric Vehicle System 10

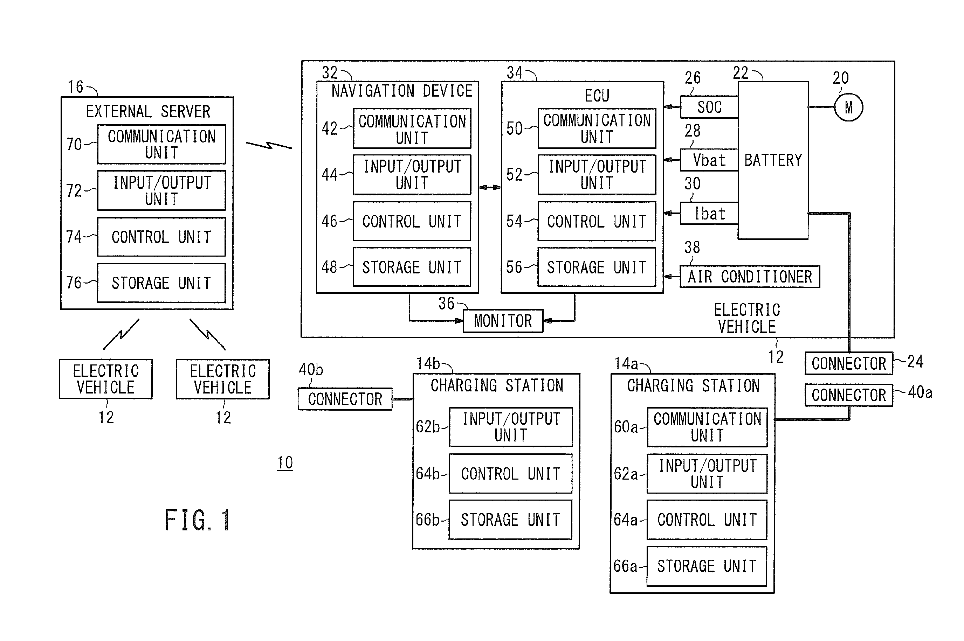

FIG. 1 is a block diagram of an electric vehicle system 10 (hereinafter also referred to as a "system 10") for multiple electric vehicles 12 according to an embodiment of the present invention. The system 10 includes a plurality of electric vehicles 12, a plurality of charging stations 14a, 14b, and an external server 16.

In the system 10, each of the electric vehicles 12 can be charged at a desired one of the charging stations 14a, 14b, and can also acquire information concerning an electric power unit cost [yen/kW] (electric power unit cost information Ipc), as well as information concerning gasoline unit cost [yen/l] (gasoline unit cost information Igc) from the charging stations 14a, 14b or the external server 16. Each of the electric vehicles 12 can display a charge difference D [yen] between an electric power charge PC [yen] and a hypothetical gasoline charge GC [yen] based on the amount of electric power Cp [kW] consumed by the electric vehicle 12, the electric power unit cost information Ipc, and the gasoline unit cost information Igc.

In the present embodiment, the amount of consumed electric power Cp, the electric power charge PC, the hypothetical gasoline charge GC, and the charge difference D are given in relation to a present traveling event of the electric vehicle 12 (after a later-described electronic controller 34 is turned on). However, the foregoing information may be given in other units (e.g., day, month, year).

In FIG. 1, internal structural details of one of the electric vehicles 12 are illustrated, whereas the structural details of the other electric vehicles 12 are omitted from illustration.

### (2) Electric Vehicle 12

Each of the electric vehicles 12 includes a traction motor 20, a battery 22, a connector 24, a state of charge sensor 26 (hereinafter referred to as an "SOC sensor 26"), a voltage sensor 28, a current sensor 30, a navigation device 32, an electronic controller 34 (hereinafter referred to as an "ECU 34"), a monitor 36, and an air conditioner 38.

The motor 20, which comprises a three-phase AC motor, generates drive power based on electric power supplied from the battery 22 through a DC/DC converter (not shown). The generated drive power is transmitted through a transmission (not shown) to rotate road wheels (not shown).

The battery 22 serves as an electric energy storage device (energy storage), which is capable of outputting a high voltage (several hundred volts in the present embodiment). The battery 22 may comprise a lithium ion secondary battery, for example.

The connector 24 can be connected to connectors 40a, 40b in the charging stations 14a, 14b so as to interconnect the battery 22 and the charging stations 14a, 14b, so that electric power from the charging stations 14a, 14b can be supplied in order to charge the battery 22. According to the present embodiment, when the connector 24 is connected to one of the connectors 40a, 40b, a switch (not shown) is turned on in order to supply electric power from a 12V battery (not shown) to the ECU 34, the SOC sensor 26, etc. A junction board (not shown), which is a circuit board with an integral assembly of protective functional parts for the battery 22, is connected between the battery 22 and the connector 24.

The SOC sensor 26 detects the SOC (State of Charge) [%] of the battery 22, and sends the detected SOC percentage to the ECU 34. The voltage sensor 28 detects the voltage (battery voltage Vbat) [V] across the battery 22, and sends the detected battery voltage Vbat [V] to the ECU 34. The current sensor 30 detects a current (battery current Ibat) [I] of the battery 22, and sends the detected battery current Ibat [I] to the ECU 34.

The navigation device 32 identifies the present position of the electric vehicle 12 using GPS (Global Positioning System) and provides route guidance information to the user. The navigation device 32 has a communication unit 42, an input/output unit 44, a control unit 46, and a storage unit 48.

The ECU 34 calculates the electric power charge PC and the hypothetical gasoline charge GC, and displays the charge difference D therebetween on the monitor 36. The ECU 34 has a communication unit 50, an input/output unit 52, a control unit 54, and a storage unit 56. Details concerning operations of the ECU 34 will be described later.

The monitor 36 outputs screens and speech for providing route guidance information from the navigation device 32, and also outputs screens and speech for providing charge difference guidance information from the ECU 34. In the present embodiment, the monitor 36 doubles as a monitor for the navigation device 32. However, the monitor 36 may also be a display unit for displaying various meters on the instrument panel of the electric vehicle 12.

In FIG. 1, the thick lines shown as interconnecting the components represent electric power lines, and the thin lines interconnecting the components represent communication lines.

### (3) Charging Stations 14a, 14b

According to the present embodiment, the charging station 14a is a public station comprising the connector 40a, a communication unit 60a, an input/output unit 62a, a control unit 64a, and a storage unit 66a. The charging station 14b is a private station comprising the connector 40b, an input/output unit 62b, a control unit 64b, and a storage unit 66b.

The charging station 14a is located in a location accessible by the public (e.g., a gas station or the parking lot of a convenience store), which can be used by anyone provided that a payment is made. More specifically, the storage unit 66a of the charging station 14a stores an electric power unit cost UPp [yen/kW], so that when the user uses the charging station 14a, the user is asked to pay for the charged amount of electric power at the charging station 14a. On the other hand, the charging station 14b is installed in an individual's home, and the user is charged with an amount of electric power supplied from the charging station 14b, together with an additional amount of electric power consumed by the individual's home. More specifically, the storage unit 66b of the charging station 14b does not store an electric power unit cost UPp, so that when the user uses the charging station 14b, the user cannot be informed from the charging station 14b concerning the electric power unit cost UPp.

### (4) External Server 16

The external server 16 indicates the electric power unit cost UPp and a gasoline unit cost UPg [yen/l] for each of the electric vehicles 12. The external server 16 has a communication unit 70, an input/output unit 72, a control unit 74, and a storage unit 76.

### 2. Process Sequence for Displaying Charge Difference

A process sequence of the ECU 34 for displaying the charge difference D will be described below.

### (1) Process Sequence When the Battery 22 is Charged

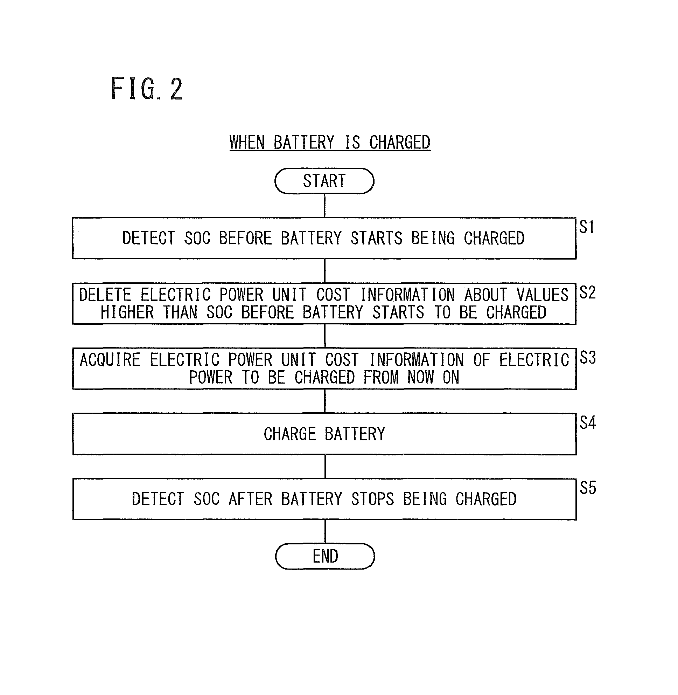

FIG. 2 is a flowchart of a process sequence of the electric vehicle 12 when the electric vehicle 12 is charged.

In step S1, when the user connects the connector 24 to either the connector 40a or the connector 40b, thereby turning on the ECU 34 and the SOC sensor 26, etc., the SOC sensor 26 detects the SOC of the battery 22 before the battery 22 starts to be charged, and sends the detected SOC to the ECU 34. The ECU 34 stores the received SOC in the storage unit 56.

In step S2, the ECU 34 deletes the electric power unit cost information Ipc corresponding to SOCs having higher values than the SOC detected in step S1, from among the electric power unit cost information Ipc that is stored in the storage unit 56. It is thus possible to store electric power unit cost information Ipc in the storage unit 56 concerning only electric power that will be charged from now on.

In step S3, the ECU 34 acquires the electric power unit cost information Ipc concerning electric power that will be charged from now on. When the ECU 34 is connected to the charging station 14a, the ECU 34 acquires the electric power unit cost information Ipc from the charging station 14a. More specifically, the control unit 54 of the ECU 34 sends a request for electric power unit cost information Ipc through the communication unit 50 to the charging station 14a. In response to the request received through the communication unit 60a, the control unit 64a of the charging station 14a reads the electric power unit cost information Ipc from the storage unit 66a, and sends the read electric power unit cost information Ipc through the communication unit 60a to the ECU 34. The control unit 54 of the ECU 34, which has received the electric power unit cost information Ipc through the communication unit 50a, stores the received electric power unit cost information Ipc in the storage unit 56.

When the ECU 34 is connected to the charging station 14b, the ECU 34 acquires electric power unit cost information Ipc from the external server 16. More specifically, the control unit 54 of the ECU 34 sends a request for electric power unit cost information Ipc through the communication unit 50 to the external server 16. In response to the request received through the communication unit 70, the control unit 74 of the external server 16 reads the electric power unit cost information Ipc from the storage unit 76, and sends the read electric power unit cost information Ipc through the communication unit 70 to the ECU 34. The control unit 54 of the ECU 34, which has received the electric power unit cost information Ipc through the communication unit 50, stores the received electric power unit cost information Ipc in the storage unit 56.

In step S4, the battery 22 is charged with electric power from the charging station 14a or the charging station 14b.

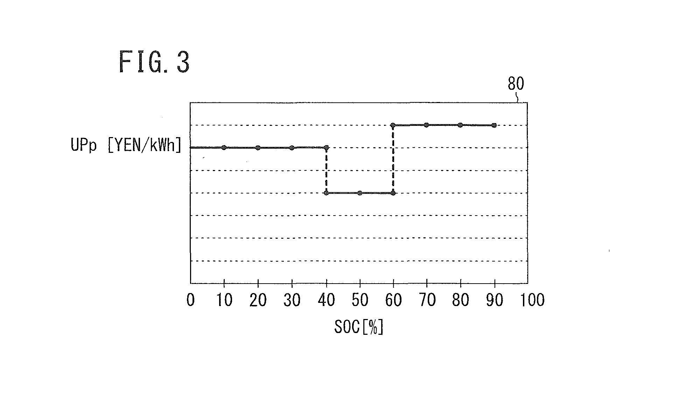

In step S5, when the charging process is finished, the SOC sensor 26 detects the SOC of the battery 22, which has been charged, and sends the detected SOC to the ECU 34. The control unit 54 of the ECU 34 stores the received SOC in the storage unit 56. As a result, the acquired electric power unit cost information Ipc is stored in the storage unit 56 in association with the SOC (step S1) before the battery 22 begins to be charged, and in association with the SOC (step S5) after the battery 22 stops being charged. More specifically, the storage unit 56 stores, as a set in a table 80 (FIG. 3), the SOC before the battery 22 starts being charged, the SOC after the battery 22 stops being charged, and the electric power unit cost information Ipc. In FIG. 3, the electric power unit cost information Ipc in a range of SOCs from 60% to 90% is stored in a present process sequence (60% represents the SOC before the battery 22 starts to be charged, and 90% represents the SOC after the battery 22 stops being charged). The electric power unit cost information Ipc, in a range of SOCs from 0% to 40%, and the electric power unit cost information Ipc in a range of SOCs from 40% to 60% were stored during previous process sequences.

### (2) Process Sequence When the Electric Vehicle 12 Travels

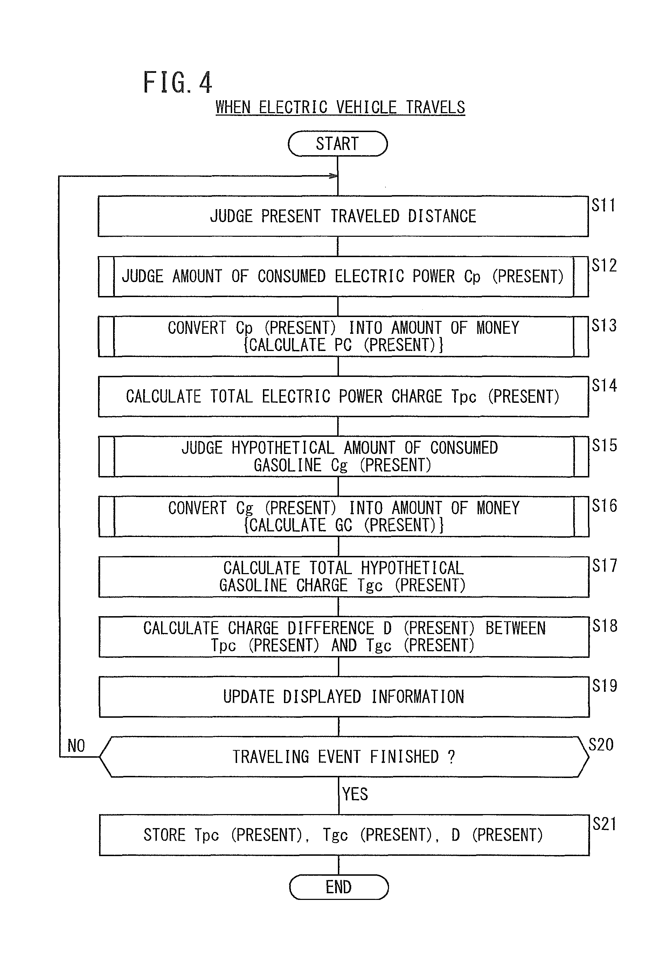

FIG. 4 is a flowchart of a charge difference display process of the electric vehicle 12 when the electric vehicle 12 travels. The charge difference display process is a process (including processes ancillary thereto) for displaying on the monitor 36 the charge difference D between the electric power charge PC and the hypothetical gasoline charge GC, based on the amount of consumed electric power Cp, the electric power unit cost information Ipc, and the gasoline unit cost information Igc, etc. Hereinafter, values determined or calculated in a present process sequence (one cycle from steps S11 through S20 in FIG. 4) will be accompanied by the term "(present)", and values determined or calculated in a previous process sequence (one cycle from steps S11 through S20 in FIG. 4) will be accompanied by the term "(previous)".

In step S11, the ECU 34 determines a present traveled distance L [km]. The traveled distance L represents a traveled distance in a present traveling event, i.e., a traveled distance after the ECU 34 has been turned on. However, as described later, the traveled distance L may represent another traveled distance. In step S12, the ECU 34 determines a present amount of consumed electric power, i.e., an amount of consumed electric power Cp (present) [kW].

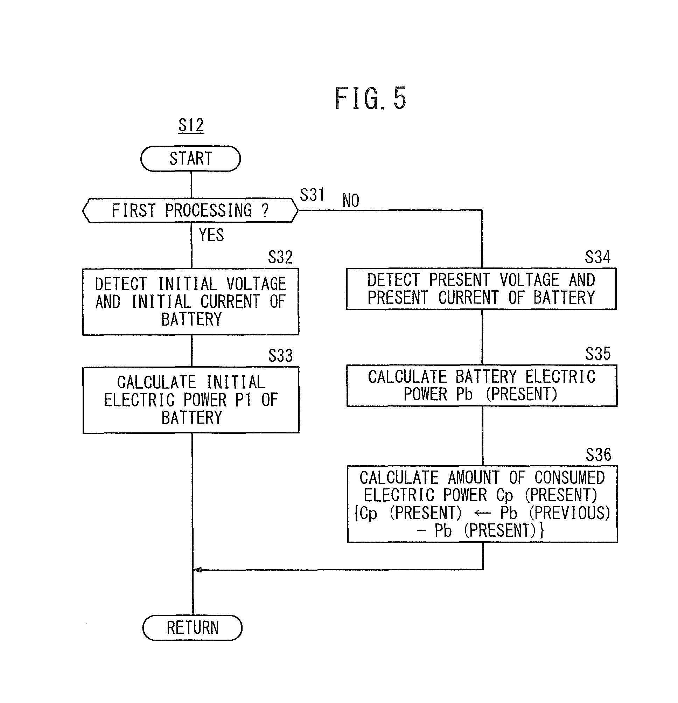

FIG. 5 is a flowchart of a process for determining the present amount of consumed electric power Cp (present). In step S31 shown in FIG. 5, the ECU 34 determines whether or not the present process of step S12 is the first process that occurs after the process sequence shown in FIG. 4 has started. If the present process of step S12 is the first process (step S31: YES), then the voltage sensor 28 detects an initial voltage V1 [V] across the battery 22, and the current sensor 30 detects an initial current I1 [A] of the battery 22. Then in step S32, the voltage sensor 28 and the current sensor 30 send the detected initial voltage V1 and the detected initial current I1 to the ECU 34.

In step S33, the ECU 34 calculates an initial electric power P1 [kW] of the battery 22 based on the initial voltage V1 and the initial current I1.

If, in step S31, the present process of step S12 is not the first process after the process sequence shown in FIG. 4 has started (step S31: NO), then the voltage sensor 28 detects a present battery voltage Vb (battery voltage Vb (present)), and the current sensor 30 detects a present battery current Ib (battery current Ib (present)). Then in step S34, the voltage sensor 28 and the current sensor 30 send the detected battery voltage Vb (present) and the detected battery current Ib (present) to the ECU 34.

In step S35, the ECU 34 calculates a present battery electric power Pb (battery electric power Pb (present)) based on the battery voltage Vb (present) and the battery current Ib (present).

In step S36, the ECU 34 subtracts the battery electric power Pb (present) from the previous battery electric power Pb (battery electric power Pb (previous)), and thereby calculates a present amount of consumed electric power Cp (amount of consumed electric power Cp (present)). If the electric vehicle 12 is currently operating in a regenerative mode, then since the battery electric power Pb (present) is greater than the battery electric power Pb (previous), the amount of consumed electric power Cp (present) is negative.

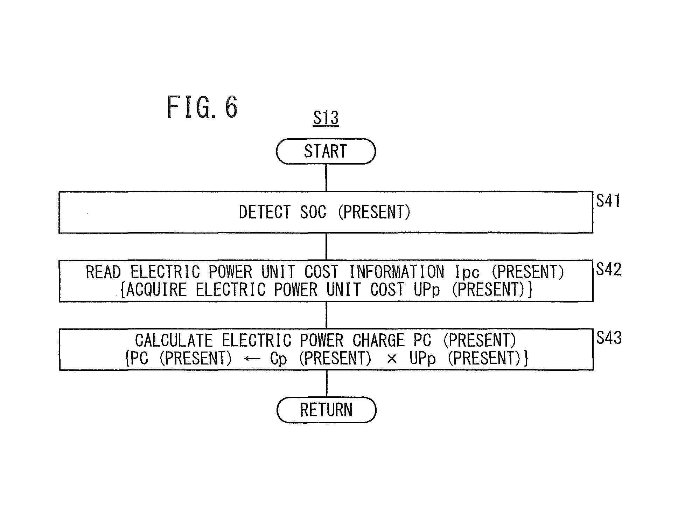

In step S13 shown in FIG. 4, the ECU 34 converts the amount of consumed electric power Cp (present) calculated in step S12 into an amount of money, and thereby calculates an electric power charge PC (present). FIG. 6 is a flowchart of a process for determining an electric power charge PC corresponding to the amount of consumed electric power Cp (present).

In step S41 shown in FIG. 6, the SOC sensor 26 detects a present SOC (SOC (present)), and sends the detected SOC (present) to the ECU 34. In step S42, the ECU 34 reads the present electric power unit cost information Ipc (electric power unit cost information Ipc (present)), and acquires an electric power unit cost UPc (present) corresponding to the SOC (present).

In step S43, the ECU 34 multiplies the amount of consumed electric power Cp (present) by the electric power unit cost UPp (present), and thereby calculates a present electric power charge PC (electric power charge PC (present)). If the electric vehicle 12 is currently operating in a regenerative mode and the amount of consumed electric power Cp (present) is negative, then the electric power charge PC (present) also is negative.

In step S14 shown in FIG. 4, the ECU 34 calculates a present total electric power charge Tpc (total electric power charge Tpc (present)) [yen]. The total electric power charge Tpc (present) represents the sum of the total electric power charge Tpc (previous), which represents the total of the electric power charges PC up to the previous process sequence, together with the electric power charge Cp (present).

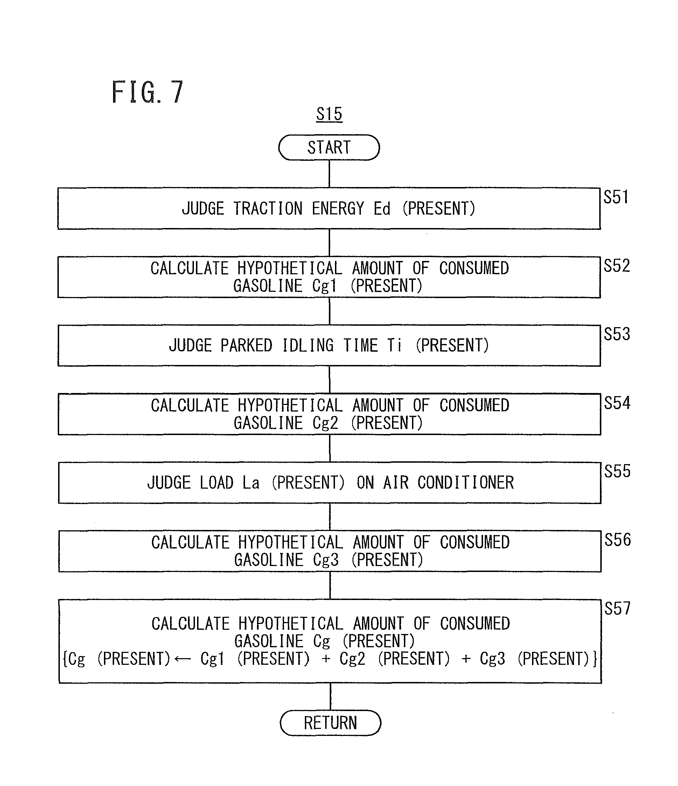

In step S15, the ECU 34 determines a hypothetical amount of consumed gasoline Cg (present). FIG. 7 is a flowchart of a process for determining the hypothetical amount of consumed gasoline Cg (present).

In step S51 shown in FIG. 7, the ECU 34 determines a present traction energy (traction energy Ed (present)) [kWh]. The traction energy Ed (present) represents the energy consumed due to operation of the motor 20 from the previous process sequence up to the present process sequence, which can be determined depending on the traveled distance of the electric vehicle 12, for example. Alternatively, simulated values or measured values may be acquired under certain conditions (accelerations, decelerations, etc.) with respect to the electric vehicle 12 or a corresponding gasoline-powered vehicle, in which case, the traction energy Ed (present) can be determined from the simulated values or measured values based on the traveling history (acceleration or deceleration history) of the electric vehicle 12.

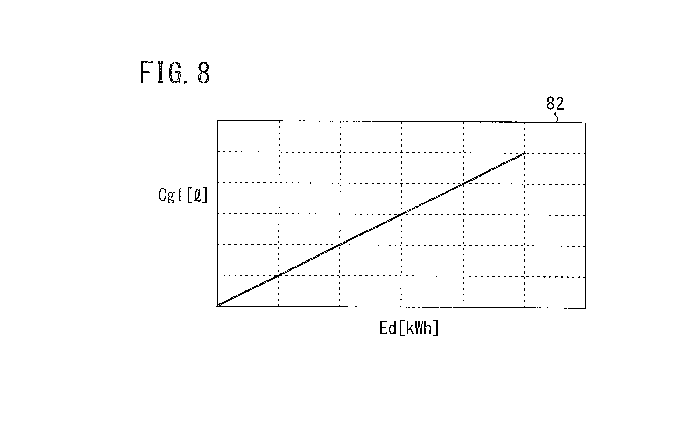

In step S52, the ECU 34 calculates a hypothetical amount of consumed gasoline Cg1 (present) [l]. The hypothetical amount of consumed gasoline Cg1 (present) represents a hypothetical amount of consumed gasoline, which corresponds to the traction energy Ed (present), and which forms part of the hypothetical amount of consumed gasoline Cg (present). More specifically, as shown in FIG. 8, the storage unit 56 of the ECU 34 stores a table 82 of traction energies Ed and hypothetical amounts of consumed gasoline Cg1, which are associated with each other. The ECU 34 determines a hypothetical amount of consumed gasoline Cg1 depending on the traction energy Ed from the table 82. The table 82 may be referred to, for example, as a database of hypothetical amounts of gasoline consumed by a gasoline-powered vehicle, which corresponds to the specifications of the electric vehicle 12.

In step S53, the ECU 34 determines a parked idling time Ti (present) [sec.]. The parked idling time Ti (present) represents a time during which the electric vehicle 12 has been parked in an idling state from the previous process sequence up to the present process sequence. When the electric vehicle 12 is parked in an idling state, the speed of the electric vehicle 12 is zero and the ignition switch (not shown) is turned on.

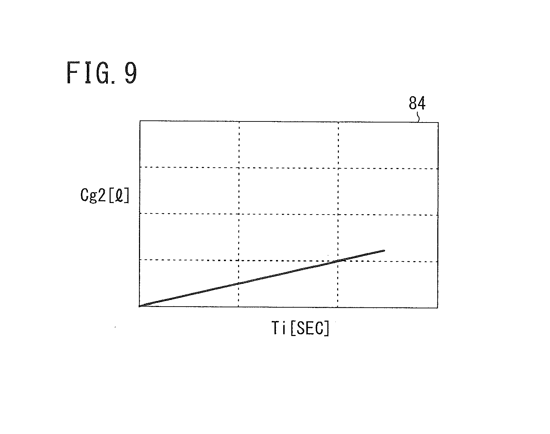

In step S54, the ECU 34 calculates a hypothetical amount of consumed gasoline Cg2 (present) [l]. The hypothetical amount of consumed gasoline Cg2 (present) represents a hypothetical amount of consumed gasoline, which corresponds to the parked idling time Ti (present) and which forms part of the hypothetical amount of consumed gasoline Cg (present). More specifically, as shown in FIG. 9, the storage unit 56 of the ECU 34 stores a table 84 of parked idling times Ti and hypothetical amounts of consumed gasoline Cg2, which are associated with each other, and from the table 84, the ECU 34 determines a hypothetical amount of consumed gasoline Cg2 depending on the parked idling time Ti. The table 84 may be referred to, for example, as a database of hypothetical amounts of gasoline consumed by a gasoline-powered vehicle, which corresponds to the specifications of the electric vehicle 12.

In step S55, the ECU 34 determines the present load (load La (present)) [A] on the air conditioner 38. The load La (present) represents a load (consumed current) on the air conditioner 38 from the previous process sequence up to the present process sequence.

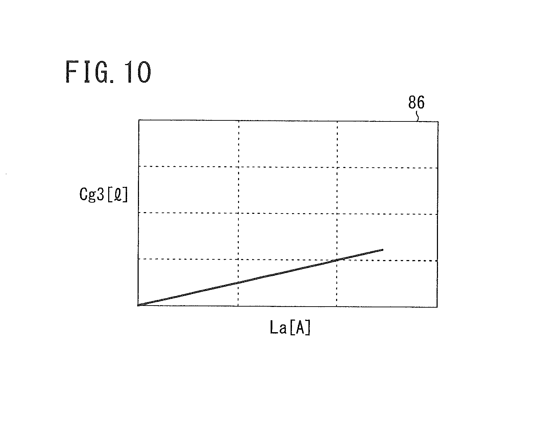

In step S56, the ECU 34 calculates a present hypothetical amount of consumed gasoline Cg3 (hypothetical amount of consumed gasoline Cg3 (present)) [l]. The hypothetical amount of consumed gasoline Cg3 (present) represents a hypothetical amount of consumed gasoline, which corresponds to the load La (present), and which forms part of the hypothetical amount of consumed gasoline Cg (present). More specifically, as shown in FIG. 10, the storage unit 56 of the ECU 34 stores a table 86 of loads La and hypothetical amounts of consumed gasoline Cg3, which are associated with each other. The ECU 34 determines a hypothetical amount of consumed gasoline Cg3 depending on the load La from the table 86. The table 86 may be referred to, for example, as a database of hypothetical amounts of gasoline consumed by a gasoline-powered vehicle, which corresponds to the specifications of the electric vehicle 12.

In step S57, the ECU 34 adds the hypothetical amounts of consumed gasoline Cg1 (present), Cg2 (present), and Cg3 (present), to thereby calculate a hypothetical amount of consumed gasoline Cg (present). In other words, the hypothetical amount of consumed gasoline Cg (present) represents the sum of the hypothetical amounts of consumed gasoline Cg1 (present), Cg2 (present), and Cg3 (present).

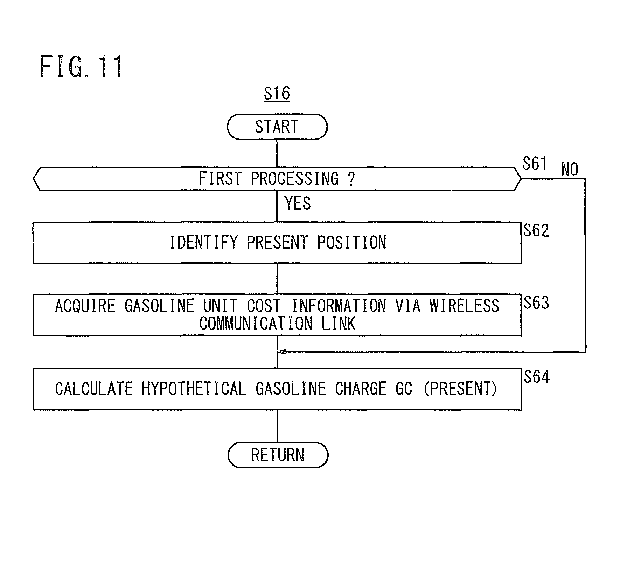

In step S16 shown in FIG. 4, the ECU 34 converts the hypothetical amount of consumed gasoline Cg (present) calculated in step S15 into an amount of money, and thereby calculates a present hypothetical gasoline charge GC (hypothetical gasoline charge GC (present)) [yen]. FIG. 11 is a flowchart of a process for acquiring gasoline unit price information Igc and for calculating a hypothetical gasoline charge GC (present).

In step S61 shown in FIG. 11, the ECU 34 determines whether or not the present process carried out in step S16 is the first process that occurs after the process sequence shown in FIG. 4 has started. If it is the first process (step S61: YES), then in step S62, the ECU 34 identifies the present position of the electric vehicle 12 with the navigation device 32. More specifically, the control unit 54 of the ECU 34 sends a request for the present position to the control unit 46 of the navigation device 32. In response to the request, the control unit 46 of the navigation device 32 identifies the present position of the electric vehicle 12 using radio waves from GPS satellites received by the communication unit 42 and the map information stored in the storage unit 48, and the control unit 46 sends the identified present position to the control unit 54 of the ECU 34.

In step S63, the ECU 34 acquires gasoline unit cost information Igc from the external server 16 via a wireless communication link. More specifically, the control unit 54 of the ECU 34 sends a request for gasoline unit cost information Igc via the communication unit 50 to the external server 16 via a wireless communication link. The request includes information concerning the present position of the electric vehicle 12. In response to the request received through the communication unit 70, the control unit 74 of the external server 16 reads from the storage unit 76 the gasoline unit cost UPg corresponding to the present position. The control unit 74 then sends the gasoline unit cost information Igc including the gasoline unit cost UPg through the communication unit 70 to the ECU 34.

If, in step S61, the present process of step S16 is not the first process after the process sequence shown in FIG. 4 has started (step S61: NO), then after step S63, the ECU 34 multiplies the hypothetical amount of consumed electric gasoline Cg (present) by the gasoline unit cost UPg (present), and thereby calculates a hypothetical gasoline charge GC (present) [yen] in step S64.

In step S17 shown in FIG. 4, the ECU 34 calculates a total hypothetical gasoline charge Tgc (present) [yen]. The total hypothetical gasoline charge Tgc (present) represents the sum of a total hypothetical gasoline charge Tgc (previous), which represents the total gasoline charges GC up to the previous process sequence, and the hypothetical gasoline charge Cg (present).

In step S18, the ECU 34 calculates the charge difference D (present) between the total electric power charge Tpc (present) and the total hypothetical gasoline charge Tgc.

In step S19, the ECU 34 updates the information displayed on the monitor 36 depending on the total electric power charge Tpc (present), the total hypothetical gasoline charge Tgc (present), and the charge difference D (present), which were calculated respectively in steps S14, S17, and S18.

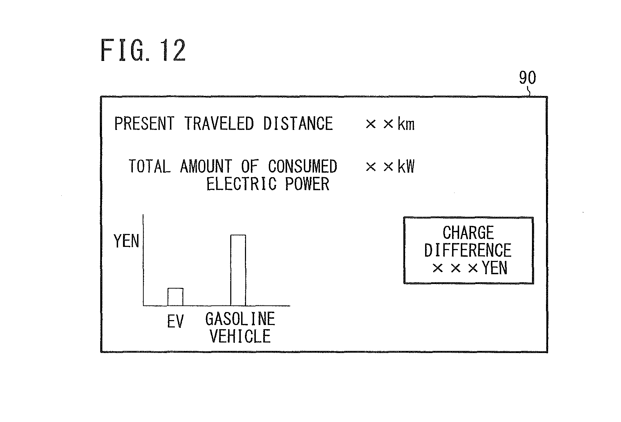

FIG. 12 shows in concise form an example of a display screen 90 of the monitor 36. As shown in FIG. 12, the display screen 90 displays a present traveled distance L and a present total amount of consumed electric power Cp1 [kW]. The total amount of consumed electric power Cp1 represents an accumulated sum of the amounts of consumed electric power CP (present) (which are calculated after step S12, although this is not illustrated in FIG. 4).

In step S20 shown in FIG. 4, the ECU 34 determines whether or not the traveling event of the electric vehicle 12 has finished. For example, the ECU 34 may determine whether or not the traveling event of the electric vehicle 12 has been completed by determining whether or not an ignition switch (not shown) has been turned off. If the traveling event of the electric vehicle 12 has not finished (step S20: NO), then control returns to step S11. If the traveling event of the electric vehicle 12 has finished (step S20: YES), then in step S21, the ECU 34 stores the total electric power charge Tpc (present), the total hypothetical gasoline charge Tgc (present), and the charge difference D (present) in the storage unit 56.

According to the present embodiment, a single processing cycle made up of steps S11 through S20 shown in FIG. 4 is performed within each unit time (e.g., every 5 seconds).

### 3. Advantages of the Present Embodiment

According to the present embodiment, as described above, the total electric power charge Tpc (present), the total hypothetical gasoline charge Tgc (present), and the charge difference D (present), which serve as information for comparison with the electric power charge PC (present) corresponding to the amount of consumed electric power Cp (present) of the battery 22 and the hypothetical gasoline charge GC (present) corresponding to the hypothetical amount of consumed gasoline Cg (present) that corresponds to the amount of consumed electric power Cp (present), can be output as images (FIG. 12). Consequently, the user of the electric vehicle 12 can recognize the amount of reduction in cost as compared with gasoline-powered vehicles.

According to the present embodiment, the ECU 34 calculates the charge difference D (present) between the total electric power charge Tpc (present) and the total hypothetical gasoline charge Tgc (present), and outputs the calculated charge difference D (present) as an image. Since the calculated charge difference D (present) is output as an image, the user can easily grasp the reduced cost achieved by using the electric vehicle 12.

According to the present embodiment, the ECU 34 outputs images representative of the total electric power charge Tpc (present) and the total hypothetical gasoline charge Tgc (present), based on the amount of consumed electric power Cp (present) and the hypothetical amount of consumed gasoline Cg (present) per unit time. Therefore, results for comparison can be output accurately.

According to the present embodiment, the ECU 34 includes the storage unit 56, which stores a range of SOCs charged by the charging stations 14a, 14b and the electric power unit costs UPp at the charging stations 14a, 14b in association with each other, while the battery 22 is being charged at the charging station 14a or the charging station 14b. The ECU 34 calculates the total electric power charge Tpc (present) using the amount of consumed electric power Cp (present) and the electric power unit costs UPp at the charging stations 14a, 14b. In this manner, the total electric power charge Tpc (present) can be reflected more precisely, thus allowing the user to easily grasp the cost difference, if any, between the electric power unit costs UPp at the different charging stations 14a, 14b and in different charging time zones.

According to the present embodiment, the storage unit 56 stores the results of charging processes at a plurality of charging stations (e.g., charging stations 14a, 14b) (FIG. 3). Therefore, comparison results for a longer period of time can be output with precision.

According to the present embodiment, the ECU 34 calculates the hypothetical amount of consumed gasoline Cg (present) using the gasoline unit cost UPg (present) corresponding to the present position of the electric vehicle 12. Therefore, comparison results can be output with precision.

### B. Modifications

The present invention is not limited to the above embodiment, but various alternative arrangements may be adopted without departing from the scope of the invention. For example, the present invention may adopt the following alternative arrangements.

In the above embodiment, the hypothetical amounts of consumed gasoline Cg1 (present), Cg2 (present), and Cg3 (present) are used to calculate the hypothetical amount of consumed gasoline Cg (present). However, the present invention is not limited to such a combination, and other combinations may be used, insofar as such combinations can be used to calculate a hypothetical amount of consumed gasoline. For example, only the hypothetical amount of consumed gasoline Cg1 (present), or a combination of the hypothetical amounts of consumed gasoline Cg1 (present) and Cg2 (present), or a combination of the hypothetical amounts of consumed gasoline Cg1 (present) and Cg3 (present) may be used to calculate a hypothetical amount of consumed gasoline.

In the above embodiments, the items shown in FIGS. 12 are displayed on the screen of the monitor 36. However, the present invention is not limited to displaying those items. Only the charge difference D (present), or a combination of the total electric power charge Tpc (present) and the total hypothetical gasoline charge Tgc (present), or a combination of the total electric power charge Tpc (present), the total hypothetical gasoline charge Tgc (present), and the charge difference D (present), or a combination of the electric power unit cost UPp (present) and the gasoline unit cost UPg (present) may be displayed on the screen of the monitor 36. In FIG. 12, data concerning the present traveling event (after the ECU 34 has been turned on) are displayed. However, the present invention is not limited to displaying those data, and data for each day, month, and year may be displayed. Alternatively, data concerning traveling events up to the present time after the electric vehicle 12 has been shipped from the factory may be displayed. Further, alternatively, data at present, i.e., instantaneous data indicative of the charge difference D, may be displayed. Speech may be output instead of or concurrently with images.

In the above embodiment, the electric power unit cost UPp and the gasoline unit cost UPg are acquired from the charging station 14a or from the external server 16. However, the present invention is not limited to using such sources, and the electric power unit cost UPp and the gasoline unit cost UPg may also be manually input by the user using the input/output unit 52.

In the above embodiment, the process of steps S11 through S20 is performed per unit time. However, the present invention is not limited to such processing times. Alternatively, the process of steps S11 through S20 may be performed per unit distance traveled (e.g., every 100 m).

In the above embodiment, the SOC of the battery 22 and the electric power unit cost UPp are associated with each other. However, a process sequence, which does not employ such an association (e.g., a process sequence with the electric power unit cost UPp being of a fixed value), may be carried out. The above association may also be updated by updating only the immediately preceding data (e.g., only one electric power unit cost UPp) without updating any data previous thereto.

In the above embodiment, the amount of consumed electric power Cp (present) is converted into a monetary amount, after which the total electric power charge Tpc (present) is calculated (steps S12 through S14 in FIG. 4). However, the present invention is not limited to such a process sequence. An accumulated value made up of respective amounts of consumed electric power Cp (present) may be determined, and then the accumulated value may be multiplied by the electric power unit cost UPp (present), to thereby calculate the total electric power charge Tpc (present).

In the above embodiment, the gasoline unit cost UPg is acquired only one time (FIG. 11). However, the gasoline unit cost UPg may be updated as many times as needed by repeating the process of steps S62 and S63. Further, in the above embodiment, the gasoline unit cost UPg is acquired at the current traveled position of the electric vehicle 12. However, the present invention is not limited to using such a gasoline unit cost UPg. For example, the gasoline unit cost UPg may be acquired at the locations of the charging stations 14a, 14b.

## Claims

1. An electric vehicle (12) propelled by supplying electric power from a battery (22) to a traction motor (20), comprising:
an amount-of-consumed-electric-power calculator (34) for calculating an amount of consumed electric power of the battery (22);
a hypothetical-amount-of-consumed-gasoline estimator (34) for estimating a hypothetical amount of consumed gasoline corresponding to the amount of consumed electric power;
an electric-power-charge calculator (34) for calculating an electric power charge corresponding to the amount of consumed electric power;
a hypothetical-gasoline-charge calculator (34) for calculating a hypothetical gasoline charge corresponding to the hypothetical amount of consumed gasoline; and
a charge-comparing-information outputting unit (36) for outputting an image or speech that provides information of a comparison between the electric power charge and the hypothetical gasoline charge.

2. The electric vehicle (12) according to claim 1, further comprising:
a charge difference calculator (34) for calculating a charge difference between the electric power charge and the hypothetical gasoline charge,
wherein the charge-comparing-information outputting unit (36) outputs an image or speech that indicates the charge difference.

3. The electric vehicle (12) according to claim 1 or 2, wherein the amount of consumed electric power and the hypothetical amount of consumed gasoline comprise an amount of consumed electric power and a hypothetical amount of consumed gasoline, respectively, per unit time or per unit traveled distance; and
the charge-comparing-information outputting unit (36) outputs an image or speech that indicates the electric power charge and the hypothetical gasoline charge based on the amount of consumed electric power and the hypothetical amount of consumed gasoline per unit time or per unit traveled distance.

4. The electric vehicle (12) according to any one of claims 1 through 3, further comprising:
a storage unit (56) for storing, in association with each other, a range of states of charge of the battery (22) charged from a charging station (14a, 14b), and an electric power unit cost at the charging station (14a, 14b) while the battery (22) is being charged from the charging station (14a, 14b),
wherein the electric-power-charge calculator (34) calculates the electric power charge using the amount of consumed electric power and the electric power unit cost at the charging station (14a, 14b).

5. The electric vehicle (12) according to claim 4, wherein the storage unit (56) stores results of charging processes at a plurality of charging stations (14a, 14b).

6. The electric vehicle (12) according to any one of claims 1 through 5, further comprising:
a position detector (32) for detecting the position of the electric vehicle (12),
wherein the hypothetical-gasoline-charge calculator (34) calculates the hypothetical gasoline charge using a gasoline unit cost corresponding to a geographic region where the electric vehicle (12) is presently located.
